# EUROPEAN PATENT APPLICATION

(11) **EP 4 130 385 A1**
(43) Date of publication of application: **08.02.2023**
(21) Application number: 21776656.7
(22) Date of filing: 18.03.2021
(51) Int. Cl.: E01C 19/48

(54) **ASPHALT FINISHER AND MACHINE LEARNING DEVICE**

(30) Priority: 27.03.2020 JP 2020059079
(71) Applicant: Sumitomo Construction Machinery Co., Ltd., Tokyo 141-6025 (JP)
(72) Inventor: HAGIWARA, Kazuaki, Chiba-shi, Chiba 263-0001 (JP)
(74) Representative: Louis Pöhlau Lohrentz
(86) International application number: PCT/JP2021/011005
(87) International publication number: WO 2021/193332

(57) **Abstract**

An asphalt finisher (100) includes a tractor (1), a hopper (2) installed in front of the tractor (1) to receive paving material, a conveyor (CV) to convey the paving material in the hopper (2) to the rear side of the tractor (1), a screw (SC) to lay and spread the paving material conveyed by the conveyor (CV) behind the tractor (1), and a screed (3) to lay and level the paving material laid and spread by the screw (SC) behind the screw (SC). The asphalt finisher (100) is configured to control the feed rate (vc) of the conveyor (CV) and the rotational speed (ws) of the screw (SC) based on a travel speed.

## Description

### TECHNICAL FIELD

The present disclosure relates to asphalt finishers.

### BACKGROUND ART

An asphalt finisher including a tractor, a hopper installed on the front side of the tractor to receive paving material, a conveyor to convey the paving material in the hopper to the rear side of the tractor, a screw to lay and spread the paving material conveyed by the conveyor widthwise of the vehicle behind the tractor, and a screed to lay and level the paving material laid and spread by the screw behind the screw is known (see Patent Document 1). Such an asphalt finisher is configured such that the conveyor's conveying speed (feed rate) of the paving material is manually adjustable.

### PRIOR ART DOCUMENT

### PATENT DOCUMENT

Patent Document 1: Japanese Unexamined Patent Publication No. 2017-160636

### SUMMARY OF THE INVENTION

### PROBLEMS TO BE SOLVED BY THE INVENTION

The travel speed of the asphalt finisher, however, may change for some reason such as a change in the grade of a road that is a target of construction or an intentional restriction on the travel speed of the asphalt finisher due to a delay in the arrival of a dump truck carrying paving material. In such a case, if the feed rate of the conveyor is maintained without adjustment, the asphalt finisher may cause an excess or deficiency of paving material around the screw.

Therefore, it is desired not to cause an excess or deficiency of paving material around the screw when there is a change in the travel speed of the asphalt finisher.

### MEANS FOR SOLVING THE PROBLEMS

An asphalt finisher according to an embodiment of the present invention includes a tractor, a hopper installed in front of the tractor to receive paving material, a conveyor configured to convey the paving material in the hopper to the rear side of the tractor, a screw configured to lay and spread the paving material conveyed by the conveyor behind the tractor, and a screed configured to lay and level the paving material laid and spread by the screw behind the screw, wherein the feed rate of the conveyor and the rotational speed of the screw are controlled based on a travel speed.

### EFFECTS OF THE INVENTION

The above-described asphalt finisher can prevent an excess or deficiency of paving material from being caused around the screw when there is a change in the travel speed.

### BRIEF DESCRIPTION OF THE DRAWINGS

FIG. 1A is a left side view of an asphalt finisher.
FIG. 1B is a top plan view of the asphalt finisher.
FIG. 2 is a functional block diagram of a controller.
FIG. 3 is a hydraulic circuit diagram illustrating an example configuration of a hydraulic system installed in the asphalt finisher.
FIG. 4A is a graph illustrating an example of the correspondence between the travel speed of the asphalt finisher and the feed rate of a conveyor CV.
FIG. 4B is a graph illustrating an example of the correspondence between the travel speed of the asphalt finisher and the rotational speed of a screw.
FIG. 5 is a chart illustrating temporal transitions of the travel speed of the asphalt finisher, the accumulated amount of paving material, and the feed rate of the conveyor.
FIG. 6 is a concept diagram illustrating an example of a determination process executed by the controller.

### EMBODIMENT OF THE INVENTION

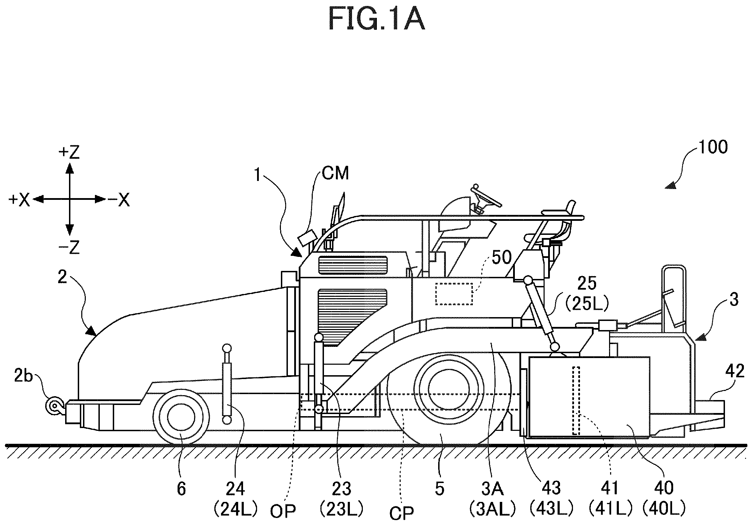

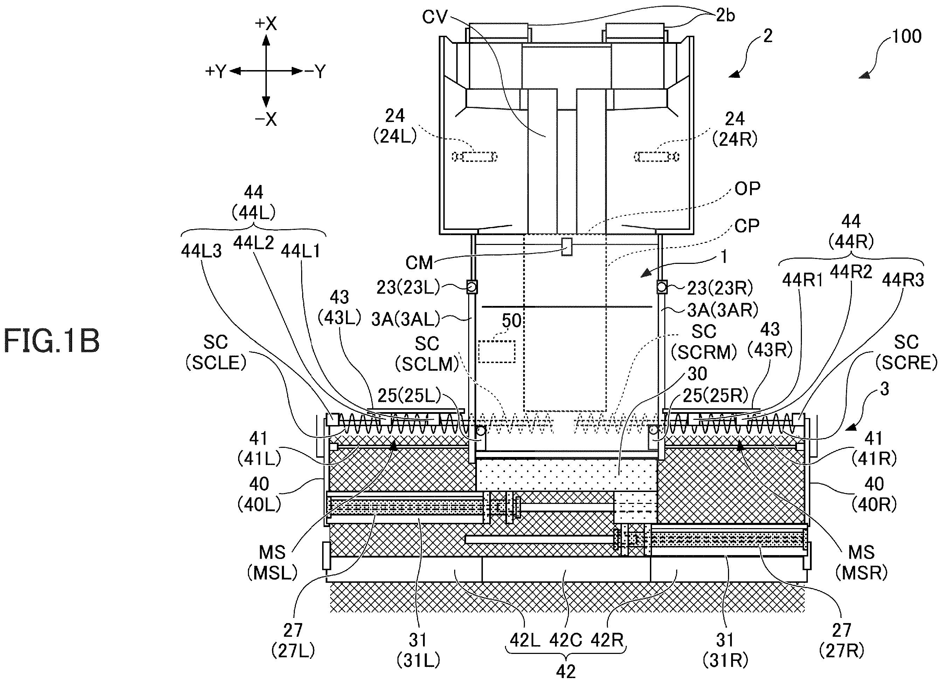

FIGS. 1A and 1B are schematic diagrams of an asphalt finisher 100 according to an embodiment of the present invention. Specifically, FIG. 1A is a left side view of the asphalt finisher 100, and FIG. 1B is a top plan view of the asphalt finisher 100.

The asphalt finisher 100 is composed mainly of a tractor 1, a hopper 2, and a screed 3. According to the example illustrated in FIGS. 1A and 1B, the asphalt finisher 100 is positioned such that the vehicle length directions correspond to the X-axis directions and the vehicle width directions correspond to the Y-axis directions. The Z-axis is oriented to be perpendicular to each of the X-axis and the Y-axis. Specifically, the front side in the vehicle length directions corresponds to the +X side, the rear side in the vehicle length directions corresponds to the -X side, the left side in the vehicle width directions corresponds to the +Y side, the right side in the vehicle width directions corresponds to the -Y side, the upper side in the vertical directions corresponds to the +Z side, and the lower side in the vertical directions corresponds to the -Z side.

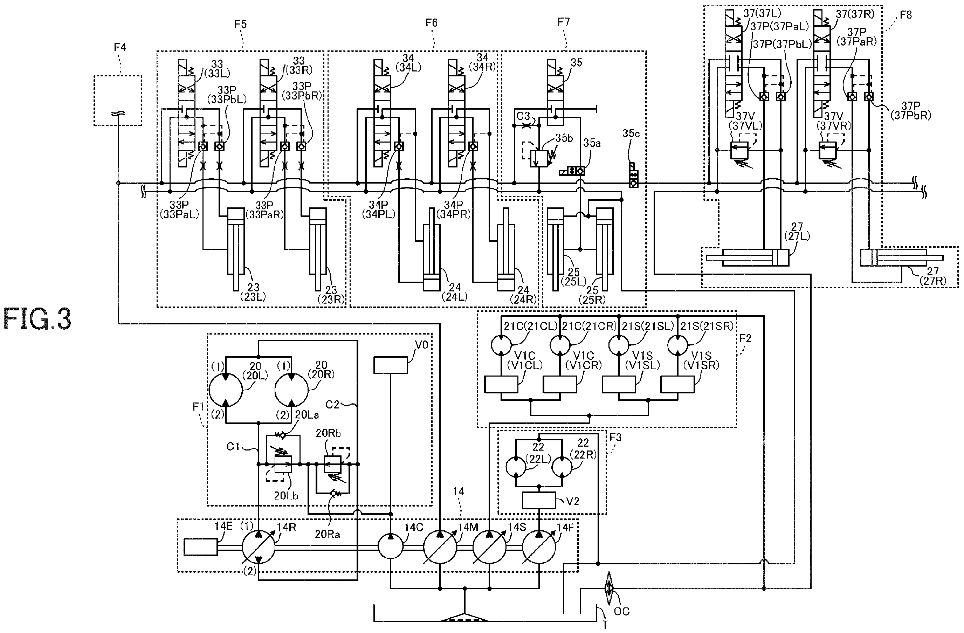

The tractor 1 is a mechanism for causing the asphalt finisher 100 to travel. According to the example illustrated in FIGS. 1A and 1B, the tractor 1 moves the asphalt finisher 100 by rotating rear wheels 5 using a rear wheel travel motor 20 (see FIG. 3) and rotating front wheels 6 using a front wheel travel motor 22 (see FIG. 3). Each of the rear wheel travel motor 20 and the front wheel travel motor 22 is a hydraulic motor that receives hydraulic oil supplied from a hydraulic pump to rotate. The tractor 1, however, may have crawlers instead of wheels.

A controller 50 is a control device that controls the asphalt finisher 100. According to the example illustrated in FIGS. 1A and 1B, the controller 50 is a computer including a CPU, a volatile storage, and a nonvolatile storage, and is mounted on the tractor 1. For example, the CPU executes programs stored in the nonvolatile storage to implement various functions of the controller 50. The various functions implemented by the controller 50 include, for example, a function to control the discharge quantity of a hydraulic pump that supplies hydraulic oil for driving hydraulic actuators and a function to control the flow of hydraulic oil between the hydraulic actuators and the hydraulic pump. The hydraulic actuators include hydraulic cylinders and hydraulic motors.

The hopper 2 is a mechanism for receiving paving material. The paving material is, for example, an asphalt mixture or the like. According to the example illustrated in FIGS. 1A and 1B, the hopper 2 is installed on the front side (+X side) of the tractor 1 and is configured to be opened and closed in the Y-axis directions (vehicle width directions) by a hopper cylinder 24. Normally, the asphalt finisher 100 fully opens the hopper 2 to receive paving material from the bed of a dump truck. Furthermore, even when receiving paving material from the bed of a dump truck, the asphalt finisher 100 continues to travel while pushing the dump truck forward through push rollers 2b. FIGS. 1A and 1B illustrate the asphalt finisher 100 with the hopper 2 fully open. An operator of the asphalt finisher 100 closes the hopper 2 to gather paving material near the inner wall of the hopper 2 to the center of the hopper 2 when the paving material in the hopper 2 is reduced. This is for enabling a conveyor CV at the bottom of the center of the hopper 2 to convey the paving material to the rear side of the tractor 1. The paving material conveyed to the rear side (-X side) of the tractor 1 is laid and spread in the vehicle width directions behind the tractor 1 and in front of the screed 3 by a screw SC.

A space recognition device CM for monitoring the state of the paving material in the hopper 2 is attached to the tractor 1. The space recognition device CM is, for example, a monocular camera, a stereo camera, a LIDAR, or the like. According to the example illustrated in FIGS. 1A and 1B, the space recognition device CM is a monocular camera that can capture an image of a situation in the hopper 2. In this case, the controller 50 can determine whether the amount of paving material in the hopper 2 is more than a predetermined amount or not based on the image captured by the monocular camera serving as the space recognition device CM.

The conveyor CV is driven by a hydraulic motor that receives hydraulic oil supplied from a hydraulic pump to rotate. According to the example illustrated in FIGS. 1A and 1B, the conveyor CV is configured to feed the paving material in the hopper 2 to the rear side of the tractor 1 via a conveyance path CP. The conveyance path CP is a substantially cuboid space formed in the tractor 1 and has a substantially rectangular entrance OP that is open to the inside of the hopper 2 at the front of the tractor 1. Specifically, the conveyor CV includes a left conveyor and a right conveyor.

The screw SC is driven by a hydraulic motor that receives hydraulic oil supplied from the hydraulic pump to rotate. Specifically, the screw SC includes a left main screw SCLM, a right main screw SCRM, a left extension screw SCLE, and a right extension screw SCRE. The left conveyor is configured to feed the paving material toward the left main screw SCLM. The right conveyor is configured to feed the paving material toward the right main screw SCRM. The left main screw SCLM and the right main screw SCRM are positioned within the width of the tractor 1. The left extension screw SCLE is connected to the left end of the left main screw SCLM to be positioned to protrude leftward from the width of the tractor 1. The right extension screw SCRE is connected to the right end of the right main screw SCRM to be positioned to protrude rightward from the width of the tractor 1.

The screed 3 is a mechanism for laying and leveling the paving material. According to the example illustrated in FIGS. 1A and 1B, the screed 3 mainly includes a main screed 30 and an extendable screed 31. The main screed 30 includes a left main screed and a right main screed. The extendable screed 31 includes a left extendable screed 31L and a right extendable screed 31R. The main screed 30, the left extendable screed 31L, and the right extendable screed 31R are arranged with forward and backward offsets so as not to overlap in the vehicle length directions. Specifically, the left extendable screed 31L is positioned behind the main screed 30, and the right extendable screed 31R is positioned behind the left extendable screed 31L. The screed 3 is a floating screed towed by the tractor 1, and is coupled to the tractor 1 through a leveling arm 3A. A screed lift cylinder 25 extends and retracts to move the screed 3 up and down together with the leveling arm 3A. The leveling arm 3A includes a left leveling arm 3AL and a right leveling arm 3AR.

The extendable screed 31 is configured to be extended and retracted in the vehicle width directions by a screed extension and retraction cylinder 27. The screed extension and retraction cylinder 27 is supported by a support fixed to the rear surface of the housing of the main screed 30, and is configured to be able to extend and retract the extendable screed 31 in the vehicle width directions. Specifically, the screed extension and retraction cylinder 27 includes a left screed extension and retraction cylinder 27L and a right screed extension and retraction cylinder 27R. The left screed extension and retraction cylinder 27L can extend and retract the left extendable screed 31L leftward in the vehicle width directions relative to the main screed 30. The right screed extension and retraction cylinder 27R can extend and retract the right extendable screed 31R rightward in the vehicle width directions relative to the main screed 30.

The leveling arm 3A is configured to be able to couple the screed 3 to the tractor 1. Specifically, the leveling arm 3A has one end coupled to the screed 3 and the other end pivotably coupled to the tractor 1.

A leveling cylinder 23 is a hydraulic cylinder that moves up and down the front end portion of the leveling arm 3A to adjust the thickness (pavement thickness) of laid and leveled paving material. According to the example illustrated in FIGS. 1A and 1B, the leveling cylinder 23 has a cylinder part coupled to the tractor 1 and a rod part coupled to the front end portion of the leveling arm 3A. The front end portion of the leveling arm 3A is slidably supported by the tractor 1. In the case of increasing the pavement thickness, the controller 50 causes hydraulic oil discharged by a hydraulic pump to flow into the rod-side oil chamber of the leveling cylinder 23 to retract the leveling cylinder 23 to raise the front end portion of the leveling arm 3A. In the case of decreasing the pavement thickness, the controller 50 causes hydraulic oil in the rod-side oil chamber of the leveling cylinder 23 to flow out to extend the leveling cylinder 23 to lower the front end portion of the leveling arm 3A.

The screed lift cylinder 25 is a hydraulic cylinder for lifting the screed 3. According to the example illustrated in FIGS. 1A and 1B, the screed lift cylinder 25 has a cylinder part coupled to the tractor 1 and a rod part coupled to the rear end portion of the leveling arm 3A. In the case of lifting the screed 3, the controller 50 causes hydraulic oil discharged by the hydraulic pump to flow into the rod-side oil chamber of the screed lift cylinder 25. As a result, the screed lift cylinder 25 retracts to lift the rear end portion of the leveling arm 3A, so that the screed 3 lifts up. In the case of lowering the lifted screed 3, the controller 50 allows hydraulic oil in the rod-side oil chamber of the screed lift cylinder 25 to flow out. As a result, the screed lift cylinder 25 extends because of the weight of the screed 3, so that the rear end portion of the leveling arm 3A lowers to lower the screed 3.

A side plate 40 is attached to the distal end of the extendable screed 31. The side plate 40 includes a left side plate 40L and a right side plate 40R. Specifically, the left side plate 40L is attached to the distal end (left end) of the left extendable screed 31L, and the right side plate 40R is attached to the distal end (right end) of the right extendable screed 31R.

The side plate 40 is also attached to the distal end of an extendable mold board 41, which is an example of a mold board. The extendable mold board 41 is a member for adjusting the amount of paving material accumulated in front of the extendable screed 31, of the paving material laid and spread by the screw SC, and is configured to be able to extend and retract in the vehicle width directions together with the extendable screed 31.

Specifically, the extendable mold board 41 is a plate-shaped member elongated in the vehicle width directions, and includes a left extendable mold board 41L and a right extendable mold board 41R. The left side plate 40L is attached to the distal end (left end) of the left extendable mold board 41L, and the right side plate 40R is attached to the distal end (right end) of the right extendable mold board 41R.

The extendable mold board 41 is configured to be able to adjust the height in the Z-axis directions independent of the extendable screed 31 and the side plate 40. The asphalt finisher 100 can adjust the amount of paving material passing through the gap between the lower end of the extendable mold board 41 and a roadbed by adjusting the size of the gap by moving up or down the extendable mold board 41. Therefore, by moving up or down the extendable mold board 41, the asphalt finisher 100 can adjust the amount (height) of paving material accumulated on the rear side (-X side) of the extendable mold board 41 and on the front side (+X side) of the extendable screed 31, and further can adjust the amount of paving material fed below the extendable screed 31.

A screed step 42 is a member that constitutes a stage for a worker who works behind the screed 3. Specifically, the screed step 42 includes a left screed step 42L, a center screed step 42C, and a right screed step 42R.

A retaining plate 43 is a plate-shaped member for preventing the paving material fed in the vehicle width directions by the screw SC from being scattered in front of the screw SC, in order for the paving material to be appropriately fed in the vehicle width directions by the screw SC. According to the example illustrated in FIGS. 1A and 1B, the retaining plate 43 includes a left retaining plate 43L and a right retaining plate 43R.

The paving material fed rightward in the vehicle width directions by the right extension screw SCRE remains within a space containing the right extension screw SCRE surrounded by the right side plate 40R, the right extendable mold board 41R, and the right retaining plate 43R (hereinafter, referred to as "right measurement space MSR") before passing under the right extendable mold board 41R. Likewise, the paving material fed leftward in the vehicle width directions by the left extension screw SCLE remains within a space containing the left extension screw SCLE surrounded by the left side plate 40L, the left extendable mold board 41L, and the left retaining plate 43L (hereinafter, referred to as "left measurement space MSL") before passing under the left extendable mold board 41L. Each of the right measurement space MSR and the left measurement space MSL is part of a measurement space MS set in an area surrounding the asphalt finisher 100.

A measuring device 44 is configured to measure the accumulated amount of paving material accumulated along the axial directions of the screw SC. The accumulated amount is also referred to as the enclosed amount. The measuring device 44 is, for example, an ultrasonic sensor, a monocular camera, a stereo camera, a LIDAR or the like. According to the example illustrated in FIGS. 1A and 1B, the measuring device 44 is an ultrasonic sensor and includes a left measuring device 44L to measure the accumulated amount of paving material accumulated along the axial directions of the left extension screw SCLE and a right measuring device 44R to measure the accumulated amount of paving material accumulated along the axial directions of the right extension screw SCRE.

The left measuring device 44L is configured to measure the accumulated amount of paving material in the left measurement space MSL and includes a first left measuring device 44L1, a second left measuring device 44L2, and a third left measuring device 44L3. The first left measuring device 44L1 is so attached to the left retaining plate 43L as to be able to measure the accumulated amount of paving material in the inner area (the area closest to the asphalt finisher 100) of the left measurement space MSL. The second left measuring device 44L2 is so attached to the left retaining plate 43L as to be able to measure the accumulated amount of paving material in the central area of the left measurement space MSL. The third left measuring device 44L3 is so attached to the left side plate 40L as to be able to measure the accumulated amount of paving material in the outer area (the area farthest from the asphalt finisher 100) of the left measurement space MSL.

The right measuring device 44R is configured to measure the accumulated amount of paving material in the right measurement space MSR and includes a first right measuring device 44R1, a second right measuring device 44R2, and a third right measuring device 44R3. The first right measuring device 44R1 is so attached to the right retaining plate 43R as to be able to measure the accumulated amount of paving material in the inner area (the area closest to the asphalt finisher 100) of the right measurement space MSR. The second right measuring device 44R2 is so attached to the right retaining plate 43R as to be able to measure the accumulated amount of paving material in the central area of the right measurement space MSR. The third right measuring device 44R3 is so attached to the right side plate 40R as to be able to measure the accumulated amount of paving material in the outer area (the area farthest from the asphalt finisher 100) of the right measurement space MSR.

According to the example illustrated in FIGS. 1A and 1B, the first left measuring device 44L1 measures the distance between the first left measuring device 44L1 and the surface of the paving material in the inner area of the left measurement space MSL, and transmits the measured distance to the controller 50. Based on the received distance, the controller 50 calculates the height (the height from the roadbed) of the surface of the paving material in the inner area of the left measurement space MSL as the accumulated amount of paving material. The same is the case with the second left measuring device 44L2, the third left measuring device 44L3, the first right measuring device 44R1, the second right measuring device 44R2, and the third right measuring device 44R3.

When the measuring device 44 is constituted of a monocular camera, a stereo camera, or a LIDAR, the accumulated amount of paving material in the right measurement space MSR may be measured with the single right measuring device 44R, and the accumulated amount of paving material in the left measurement space MSL may be measured with the single left measuring device 44L. This is because the monocular camera, the stereo camera, or the LIDAR can simultaneously measure the height (accumulated amount) of paving material in a wider area than the ultrasonic sensor. For example, this is because the single right measuring device 44R constituted of a LIDAR can simultaneously measure the height of the paving material in the inner area, the central area, and the outer area of the right measurement space MSR and because the single left measuring device 44L constituted of a LIDAR can simultaneously measure the height of the paving material in the inner area, the central area, and the outer area of the left measurement space MSL.

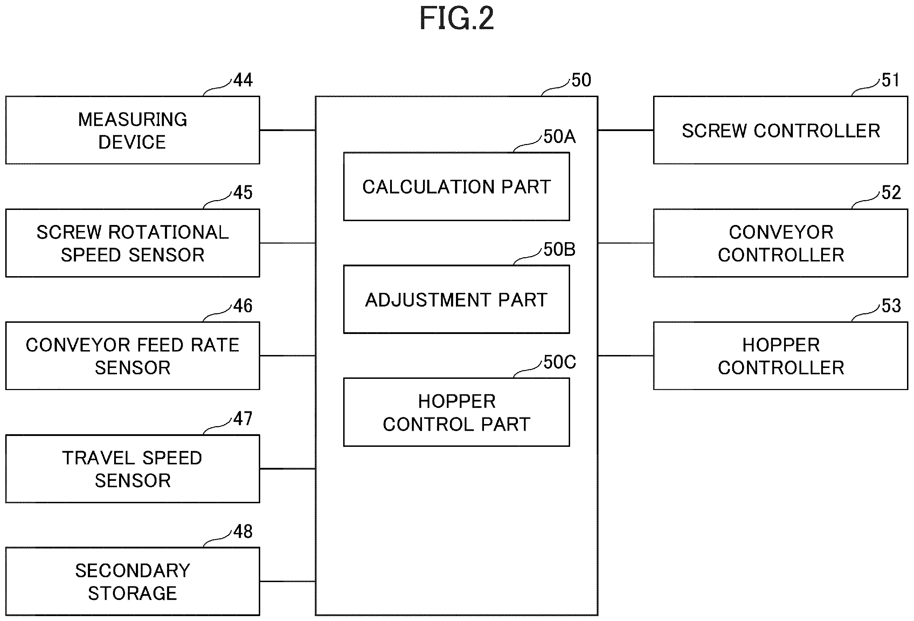

Next, an adjustment function that is one of the functions of the controller 50 is described with reference to FIG. 2. FIG. 2 is a functional block diagram of the controller 50.

The adjustment function is a function for adjusting the amount of paving material accumulated in the measurement space MS and is implemented mainly by the cooperation of the measuring device 44, a screw rotational speed sensor 45, a conveyor feed rate sensor 46, a travel speed sensor 47, a secondary storage 48, a screw controller 51, a conveyor controller 52, and a hopper controller 53.

The screw rotational speed sensor 45 is configured to detect the rotational speed of the screw SC. According to the example illustrated in FIG. 2, the screw rotational speed sensor 45 is an encoder to detect the angular velocity of the rotating shaft of the hydraulic motor that drives the screw SC. Specifically, the screw rotational speed sensor 45 includes a left screw rotational speed sensor and a right screw rotational speed sensor. The left screw rotational speed sensor is an encoder to detect the angular velocity of the rotating shaft of a hydraulic motor (see a left screw motor 21SL in FIG. 3) that drives the left main screw SCLM and the left extension screw SCLE. The right screw rotational speed sensor is an encoder to detect the angular velocity of the rotating shaft of a hydraulic motor (see a right screw motor 21SR in FIG. 3) that drives the right main screw SCRM and the right extension screw SCRE. The screw rotational speed sensor 45 may also be constituted of a proximity switch to detect slits formed in a rotary disk, or the like.

The conveyor feed rate sensor 46 is configured to detect the feed rate of the conveyor CV. According to the example illustrated in FIG. 2, the conveyor feed rate sensor 46 is an encoder to detect the angular velocity of the rotating shaft of the hydraulic motor that drives the conveyor CV. Specifically, the conveyor feed rate sensor 46 includes a left conveyor feed rate sensor and a right conveyor feed rate sensor. The left conveyor feed rate sensor is an encoder to detect the angular velocity of the rotating shaft of a hydraulic motor (see a left conveyor motor 21CL in FIG. 3) that drives the left conveyor. The right conveyor feed rate sensor is an encoder to detect the angular velocity of the rotating shaft of a hydraulic motor (see a right conveyor motor 21CR in FIG. 3) that drives the right conveyor. The conveyor feed rate sensor 46 may also be constituted of a proximity switch to detect slits formed in a rotary disk, or the like.

The travel speed sensor 47 is configured to detect the travel speed of the asphalt finisher 100. According to the example illustrated in FIG. 2, the travel speed sensor 47 is an encoder to detect the angular velocity of the rotating shaft of the rear wheel travel motor 20 that drives the rear wheels 5. Specifically, the travel speed sensor 47 includes a left travel speed sensor and a right travel speed sensor. The left travel speed sensor is an encoder to detect the angular velocity of the rotating shaft of a left rear wheel travel motor 20L that drives a left rear wheel. The right travel speed sensor is an encoder to detect the angular velocity of the rotating shaft of a right rear wheel travel motor 20R that drives a right rear wheel. The travel speed sensor 47 may also be constituted of a proximity switch to detect slits formed in a rotary disk, or the like.

The secondary storage 48 is configured to store various kinds of information. According to the example illustrated in FIG. 2, the secondary storage 48 is a nonvolatile storage mounted on the tractor 1 and stores various kinds of information.

The screw controller 51 is configured to control the rotational speed of the screw SC. According to the example illustrated in FIG. 2, the screw controller 51 is a solenoid valve to control the flow rate of hydraulic oil flowing into the hydraulic motor that drives the screw SC. Specifically, the screw controller 51 increases or decreases the flow area of a conduit connecting the hydraulic pump and the hydraulic motor that drives the screw SC in response to a control command from the controller 50. More specifically, the screw controller 51 increases the flow area to increase the flow rate of hydraulic oil flowing into the hydraulic motor that drives the screw SC, thereby increasing the rotational speed of the screw SC. The screw controller 51 decreases the flow area to decrease the flow rate of hydraulic oil flowing into the hydraulic motor that drives the screw SC, thereby decreasing the rotational speed of the screw SC.

The conveyor controller 52 is configured to control the feed rate of the conveyor CV. According to the example illustrated in FIG. 2, the conveyor controller 52 is a solenoid valve to control the flow rate of hydraulic oil flowing into the hydraulic motor that drives the conveyor CV. Specifically, the conveyor controller 52 increases or decreases the flow area of a conduit connecting the hydraulic pump and the hydraulic motor that drives the conveyor CV in response to a control command from the controller 50. More specifically, the conveyor controller 52 increases the flow area to increase the flow rate of hydraulic oil flowing into the hydraulic motor that drives the conveyor CV, thereby increasing the feed rate of the conveyor CV. The conveyor controller 52 decreases the flow area to decrease the flow rate of hydraulic oil flowing into the hydraulic motor that drives the conveyor CV, thereby decreasing the feed rate of the conveyor CV.

The hopper controller 53 is configured to control the amount of extension and retraction of the hopper cylinder 24. According to the example illustrated in FIG. 2, the hopper controller 53 is a solenoid valve to control the flow rate of hydraulic oil flowing into the hopper cylinder 24. Specifically, the hopper controller 53 switches the opening and the closing of a conduit connecting the hydraulic pump and the bottom-side oil chamber of the hopper cylinder 24 in response to a control command from the controller 50. More specifically, the hopper controller 53 is configured to open the conduit to cause hydraulic oil to flow into the bottom-side oil chamber of the hopper cylinder 24, thereby extending the hopper cylinder 24 to close the hopper 2. The hopper controller 53 switches the opening and the closing of a conduit connecting a hydraulic oil tank and the bottom-side oil chamber of the hopper cylinder 24 in response to a control command from the controller 50. More specifically, the hopper controller 53 is configured to open the conduit to cause hydraulic oil to flow out of the bottom-side oil chamber of the hopper cylinder 24, thereby retracting the hopper cylinder 24 to open the hopper 2.

The controller 50 obtains information from the measuring device 44, the screw rotational speed sensor 45, the conveyor feed rate sensor 46, the travel speed sensor 47, and the secondary storage 48, performs various operations, and outputs control commands to the screw controller 51, the conveyor controller 52, and the hopper controller 53 in accordance with the results of the operations.

Specifically, the controller 50 determines whether a predetermined condition is satisfied based on information obtained from at least one of the measuring device 44, the screw rotational speed sensor 45, the conveyor feed rate sensor 46, the travel speed sensor 47, and the secondary storage 48, and outputs a control command to at least one of the screw controller 51, the conveyor controller 52, and the hopper controller 53 in response to determining that the predetermined condition is satisfied.

More specifically, the controller 50 includes a calculation part 50A, an adjustment part 50B, and a hopper control part 50C as functional blocks constituted of software, hardware, or their combination.

The calculation part 50A is configured to calculate the height (accumulated amount) of paving material in multiple areas within the measurement space MS from the distance between the measuring device 44 and the surface of the paving material measured by the measuring device 44.

According to the example illustrated in FIG. 2, the calculation part 50A calculates the height (accumulated amount) of paving material in the inner area of the left measurement space MSL from the distance measured by the first left measuring device 44L1, calculates the height (accumulated amount) of area paving material in the central area of the left measurement space MSL from the distance measured by the second left measuring device 44L2, and calculates the height (accumulated amount) of paving material in the outer area of the left measurement space MSL from the distance measured by the third left measuring device 44L3.

Likewise, the calculation part 50A calculates the height (accumulated amount) of paving material in the inner area of the right measurement space MSR from the distance measured by the first right measuring device 44R1, calculates the height (accumulated amount) of paving material in the central area of the right measurement space MSR from the distance measured by the second right measuring device 44R2, and calculates the height (accumulated amount) of paving material in the outer area of the right measurement space MSR from the distance measured by the third right measuring device 44R3.

In this manner, the calculation part 50A can identify the distribution of the accumulated amount of the paving material within the left measuring space MSL and the distribution of the accumulated amount of the paving material within the right measuring space MSR.

The right measurement space MSR, which is divided into the three areas of the inner area, the central area, and the outer area according to the above-described example, may alternatively be divided into the two areas of the inner area and the outer area or be divided into four or more areas. That is, while the height of paving material is measured with the three measuring devices, namely, the first right measuring device 44R1, the second right measuring device 44R2, and the third right measuring device 44R3, in the right measurement space MSR according to the above-described example, the height of paving material in a single area may be measured with a single measuring device, the height of paving material in two areas may be measured with two corresponding measuring devices, or the height of paving material in four or more areas may be measured with four or more corresponding measuring devices. The same applies to the left measurement space MSL.

When the measuring device 44 is constituted of a monocular camera, a stereo camera, or a LIDAR, the height of paving material in two or more areas in the right measurement space MSR may be measured with the single right measuring device 44R. The same applies to the left measurement space MSL.

To "identify the distribution of the accumulated amount of paving material in a measurement space" may be to identify the difference between the actual distribution of the accumulated amount and the desired distribution of the accumulated amount. In this case, the desired distribution of the accumulated amount may be prerecorded as a "target distribution". For example, information on the target distribution may be prerecorded in the secondary storage 48.

For example, the target distribution of the accumulated amount with respect to the right measurement space MSR is represented by the target height (target accumulated amount) of paving material in each of the inner area, the central area, and the outer area of the right measurement space MSR. The target distribution of the accumulated amount with respect to the right measurement space MSR may be set as a state where the target height of paving material is the same in the inner area, the central area, and the outer area, or may be set as a state where the target height of paving material in the inner area is smaller than the target height of paving material in the central area and the target height of paving material in the central area is smaller than the target height of paving material in the outer area.

To "identify the distribution of the accumulated amount of paving material in a measurement space" may also be to identify whether the actual height of paving material in each of the inner area, the central area, and the outer area is greater than, the same as, or smaller than the target height.

The calculation part 50A may calculate a first volume that is the volume of the paving material fed to the rear side of the tractor 1 based on the area of the entrance OP of the conveyance path CP and the feed rate of the conveyor CV, calculate a second volume by removing the volume of the screw SC from the first volume, and then identify the distribution of the accumulated amount of the paving material along the axial directions of the screw SC based on the second volume. In this case, the calculation part 50A may correct the result of the identification that is based on the output of the measuring device 44, using the second volume.

The adjustment part 50B is configured to adjust the amount of paving material supplied to the screed 3. According to the example illustrated in FIG. 2, the adjustment part 50B is configured to control the feed rate of the conveyor CV and the rotational speed of the screw SC based on the travel speed of the asphalt finisher 100. Typically, the adjustment part 50B changes the feed rate of the conveyor CV and the rotational speed of the screw SC based on the travel speed of the asphalt finisher 100. For example, the adjustment part 50B increases the feed rate of the conveyor CV and increases the rotational speed of the screw SC as the travel speed increases. The adjustment part 50B decreases the feed rate of the conveyor CV and decreases the rotational speed of the screw SC as the travel speed decreases. The adjustment part 50B, however, may change the rotational speed of the screw SC while maintaining the feed rate of the conveyor CV or may change the feed rate of the conveyor CV while maintaining the rotational speed of the screw SC, even when the travel speed changes. The adjustment part 50B may also maintain the feed rate of the conveyor CV and the rotational speed of the screw SC even when the travel speed changes. According to the example illustrated in FIG. 2, the adjustment part 50B obtains the travel speed of the asphalt finisher 100 based on the output of the travel speed sensor 47.

As described above, according to the example illustrated in FIG. 2, the adjustment part 50B is configured to directly control the feed rate of the conveyor CV and the rotational speed of the screw SC based on the travel speed. The adjustment part 50B, however, may also be configured to indirectly control the feed rate of the conveyor CV and the rotational speed of the screw SC based on the travel speed.

For example, the adjustment part 50B may be configured to calculate the target amount of paving material based on the travel speed and indirectly control the feed rate of the conveyor CV and the rotational speed of the screw SC based on the target amount. The target amount of paving material is, for example, the target amount of paving material supplied to the screed 3 per unit time. The adjustment part 50B calculates the target amount of paving material based on, for example, the travel speed, pavement width, and pavement thickness. The pavement width and the pavement thickness are typically values listed in a construction plan drawing, and are input to the controller 50 via an undepicted input device or the like. At least one of the pavement width and the pavement thickness, however, may be a value detected by a sensor such as an image sensor. The adjustment part 50B may separately calculate the target amount of paving material supplied to the left side in the vehicle width directions (the left target amount) and the target amount of paving material supplied to the right side in the vehicle width directions (the right target amount).

In this case, typically, the adjustment part 50B changes the feed rate of the conveyor CV and the rotational speed of the screw SC based on the target amount of paving material. For example, the adjustment part 50B increases the feed rate of the conveyor CV and increases the rotational speed of the screw SC as the target amount increases. The adjustment part 50B decreases the feed rate of the conveyor CV and decreases the rotational speed of the screw SC as the target amount decreases. The adjustment part 50B, however, may change the rotational speed of the screw SC while maintaining the feed rate of the conveyor CV or may change the feed rate of the conveyor CV while maintaining the rotational speed of the screw SC, even when the target amount changes. The adjustment part 50B may also maintain the feed rate of the conveyor CV and the rotational speed of the screw SC even when the target amount changes.

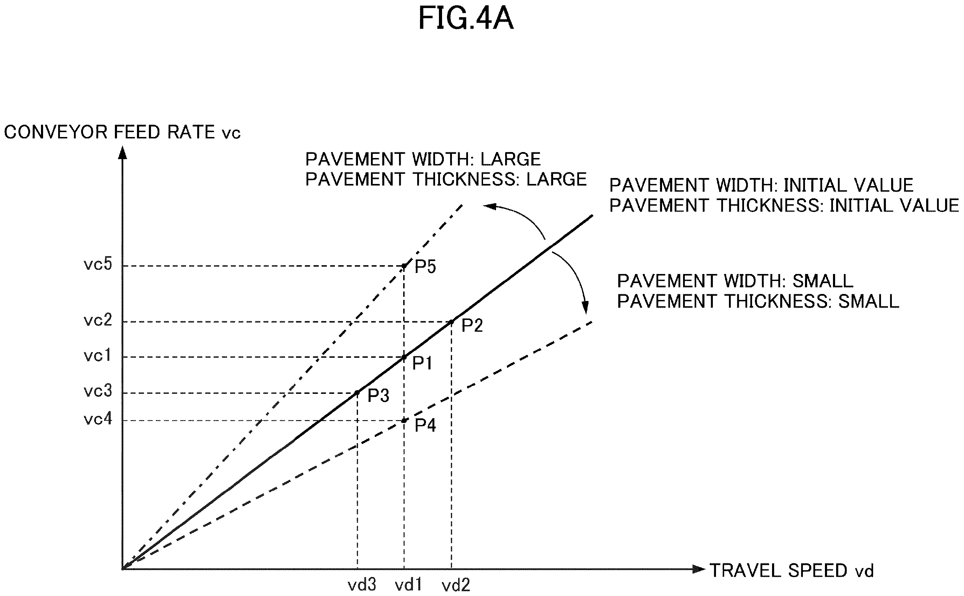

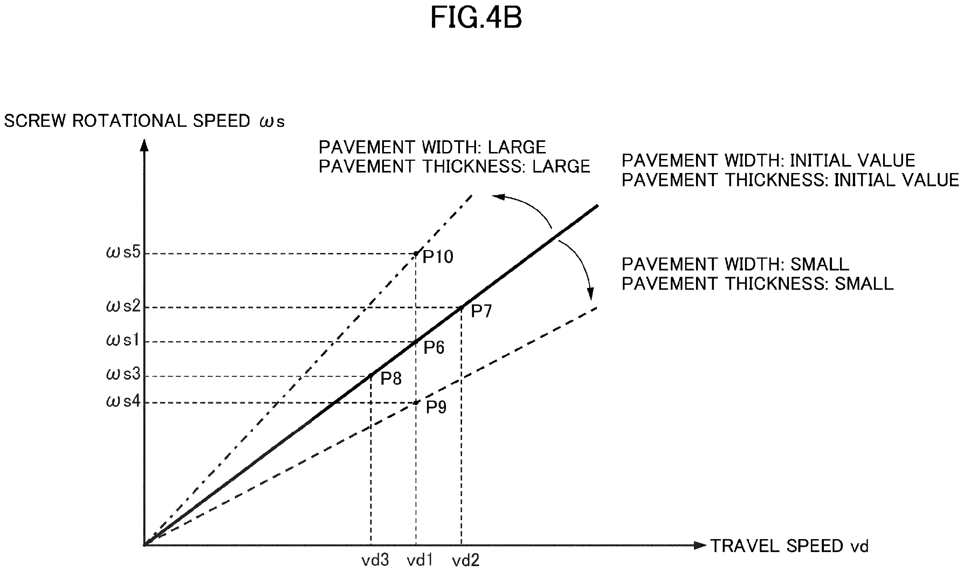

The adjustment part 50B may also be configured to adjust the height (accumulated amount) of paving material in the measurement space MS. For example, the adjustment part 50B may be configured to control at least one of the rotational speed of the screw SC and the feed rate of the conveyor CV so that the actual height of paving material in each of one or more areas within the measurement space MS becomes the target height. In this case, for example, the adjustment part 50B may use a value output by a trained model created by machine learning as a limit value (a lower limit value or an upper limit value) for the feed rate of the conveyor CV determined from the correspondence illustrated in FIG. 4A as described below. For example, the adjustment part 50B may also use a value output by a trained model created by machine learning as a limit value (a lower limit value or an upper limit value) for the rotational speed of the screw SC determined from the correspondence illustrated in FIG. 4B as described below. According to this configuration, the adjustment part 50B can reduce variations in drag resistance caused by an excess or deficiency of the accumulated amount. The drag resistance is a resistance due to paving material laid and spread in front of the screed 3 that is generated when the tractor 1 moves forward, dragging the screed 3. The adjustment part 50B may also limit the target amount of paving material based on the amount of paving material accumulated between the extendable mold board 41 and the retaining plate 43.

The hopper control part 50C is configured to close the hopper 2 when a predetermined condition is satisfied.

According to the example illustrated in FIG. 2, the hopper control part 50C determines whether the amount of paving material in the hopper 2 is more or less than a predetermined amount based on an image captured by a monocular camera serving as the space recognition device CM. In response to determining that the amount of paving material in the hopper 2 is less than a predetermined amount, the hopper control part 50C transmits a control command to the hopper controller 53. Receiving the control command, the hopper controller 53 causes hydraulic oil to flow into the bottom-side oil chamber of the hopper cylinder 24 to extend the hopper cylinder 24 to close the hopper 2.

The hopper control part 50C may also be configured to close the hopper 2 in response to determining that the amount of paving material in the hopper 2 is less than a predetermined amount when having succeeded in determining that the actual height (accumulated amount) of paving material in the inner area of the measurement space MS is smaller than the target height (target accumulated amount). That is, the hopper control part 50C may also be configured not to close the hopper 2 even when determining that the amount of paving material in the hopper 2 is less than a predetermined mount, if the actual height (accumulated amount) of paving material in the inner area of the measurement space MS is greater than or equal to the target height (target accumulated amount). The inner area of the measurement space MS is at least one of the inner area of the right measurement space MSR and the inner area of the left measurement space MSL.

Furthermore, the hopper control part 50C may also be configured not to close the hopper 2 even when determining that the above-described predetermined condition is satisfied, in the case of having succeeded in identifying that a dump truck carrying paving material is in contact with the asphalt finisher 100 based on an image captured by a monocular camera serving as the space recognition device CM, for example. This is for preventing contact between a hopper wing and the dump truck. When the dump truck is in contact with the asphalt finisher 100, the rear wheels of the dump truck are in contact with the push rollers 2b (see FIGS. 1A and 1B) disposed on the front side of the hopper 2. At this point, a driver of the dump truck shifts the gear to neutral. This allows the dump truck to be pushed by the driving force of the asphalt finisher 100 to move forward with the asphalt finisher 100.

Next, a hydraulic system installed in the asphalt finisher 100 is described with reference to FIG. 3. FIG. 3 is a hydraulic circuit diagram illustrating an example configuration of the hydraulic system installed in the asphalt finisher 100.

The hydraulic system mainly includes a hydraulic source 14, a rear wheel drive part F1, a conveyor and screw drive part F2, a front wheel drive part F3, a steering and compaction device drive part F4, a leveling part F5, a hopper drive part F6, a screed lift part F7, and a screed extension and retraction part F8.

The hydraulic source 14 is configured to supply hydraulic oil for operating various drive parts. According to this embodiment, the hydraulic source 14 mainly includes an engine 14E, a rear wheel travel pump 14R, a charge pump 14C, a cylinder pump 14M, a conveyor and screw pump 14S, and a front wheel travel pump 14F.

The engine 14E is a drive source to drive the rear wheel travel pump 14R, the charge pump 14C, the cylinder pump 14M, the conveyor and screw pump 14S, and the front wheel travel pump 14F.

The rear wheel travel pump 14R is a variable displacement hydraulic pump to supply hydraulic oil for driving to the rear wheel drive part F1. According to this embodiment, the rear wheel travel pump 14R is a swash plate variable displacement bi-directional hydraulic pump used in a closed circuit.

The charge pump 14C is a fixed displacement hydraulic pump to supply hydraulic oil for control to the rear wheel drive part F1.

The cylinder pump 14M is a variable displacement hydraulic pump that can supply hydraulic oil to each of the steering and compaction device drive part F4, the leveling part F5, the hopper drive part F6, the screed lift part F7, and the screed extension and retraction part F8. According to this embodiment, the cylinder pump 14M is a swash plate variable displacement hydraulic pump, whose discharge quantity is so controlled as to cause the discharge pressure to be constant at a predetermined pressure.

The conveyor and screw pump 14S is a variable displacement hydraulic pump to supply hydraulic oil to the conveyor and screw drive part F2. According to this embodiment, the conveyor and screw pump 14S is a swash plate variable displacement hydraulic pump.

The front wheel travel pump 14F is a variable displacement hydraulic pump to supply hydraulic oil to the front wheel drive part F3. According to this embodiment, the front wheel travel pump 14F is a swash plate variable displacement hydraulic pump.

The rear wheel drive part F1 is configured to be able to drive the rear wheels 5. According to this embodiment, the rear wheel drive part F1 includes the left rear wheel travel motor 20L, the right rear wheel travel motor 20R, check valves 20La and 20Ra, relief valves 20Lb and 20Rb, and a speed reducer switch valve V0.

The left rear wheel travel motor 20L is a hydraulic motor to drive the left rear wheel. The right rear wheel travel motor 20R is a hydraulic motor to drive the right rear wheel. According to this embodiment, the left rear wheel travel motor 20L and the right rear wheel travel motor 20R are continuously variable hydraulic motors and constitute a closed circuit (HST circuit) together with the rear wheel travel pump 14R.

The check valve 20La maintains the pressure of hydraulic oil in a conduit C1 connecting a first port of the rear wheel travel pump 14R and a second port of each of the left rear wheel travel motor 20L and the right rear wheel travel motor 20R at or above a predetermined pressure. Specifically, the check valve 20La causes hydraulic oil discharged by the charge pump 14C to flow into the conduit C1 when the pressure of hydraulic oil in the conduit C1 falls below the discharge pressure of the charge pump 14C. Parenthesized numbers in the drawing represent port numbers. Likewise, the check valve 20Ra maintains the pressure of hydraulic oil in a conduit C2 connecting a second port of the rear wheel travel pump 14R and a first port of each of the left rear wheel travel motor 20L and the right rear wheel travel motor 20R at or above a predetermined pressure. Specifically, the check valve 20Ra causes hydraulic oil discharged by the charge pump 14C to flow into the conduit C2 when the pressure of hydraulic oil in the conduit C2 falls below the discharge pressure of the charge pump 14C.

The relief valve 20Lb maintains the pressure of hydraulic oil in the conduit C1 at or below a predetermined relief pressure. Specifically, the relief valve 20Lb causes hydraulic oil in the conduit C1 to flow out of the closed circuit when the pressure of hydraulic oil in the conduit C1 exceeds the relief pressure. Likewise, the relief valve 20Rb maintains the pressure of hydraulic oil in the conduit C2 at or below a predetermined relief pressure. Specifically, the relief valve 20Rb causes hydraulic oil in the conduit C2 to flow out of the closed circuit when the pressure of hydraulic oil in the conduit C2 exceeds the relief pressure.

The speed reducer switch valve V0 is a mechanism to switch the reduction ratio of each of the left rear wheel travel motor 20L and the right rear wheel travel motor 20R. According to this embodiment, the speed reducer switch valve V0 switches the reduction ratio of each of the left rear wheel travel motor 20L and the right rear wheel travel motor 20R using hydraulic oil discharged by the charge pump 14C in response to a control command from the controller 50.

The conveyor and screw drive part F2 is configured to be able to drive the conveyor CV and the screw SC. According to this embodiment, the conveyor and screw drive part F2 mainly includes a conveyor motor 21C, a screw motor 21S, a conveyor control valve V1C, and a screw control valve V1S.

Each of the conveyor motor 21C and the screw motor 21S is a variable displacement hydraulic motor that forms a closed circuit. The conveyor motor 21C includes the left conveyor motor 21CL and the right conveyor motor 21CR. The screw motor 21S includes the left screw motor 21SL and the right screw motor 21SR. The conveyor control valve V1C includes a left conveyor control valve V1CL and a right conveyor control valve V1CR. The screw control valve V1S includes a left screw control valve V1SL and a right screw control valve V1SR.

The left conveyor control valve V1CL operates in response to a control command from the controller 50 to cause hydraulic oil discharged by the conveyor and screw pump 14S to flow into the intake port of the left conveyor motor 21CL and discharge hydraulic oil flowing out of the discharge port of the left conveyor motor 21CL to a hydraulic oil tank T. The right conveyor control valve V1CR operates in response to a control command from the controller 50 to cause hydraulic oil discharged by the conveyor and screw pump 14S to flow into the intake port of the right conveyor motor 21CR and discharge hydraulic oil flowing out of the discharge port of the right conveyor motor 21CR to the hydraulic oil tank T. Likewise, the left screw control valve V1SL operates in response to a control command from the controller 50 to cause hydraulic oil discharged by the conveyor and screw pump 14S to flow into the intake port of the left screw motor 21SL and discharge hydraulic oil flowing out of the discharge port of the left screw motor 21SL to the hydraulic oil tank T. The right screw control valve V1SR operates in response to a control command from the controller 50 to cause hydraulic oil discharged by the conveyor and screw pump 14S to flow into the intake port of the right screw motor 21SR and discharge hydraulic oil flowing out of the discharge port of the right screw motor 21SR to the hydraulic oil tank T. Hydraulic oil flowing out of the discharge port of each of the left conveyor motor 21CL, the right conveyor motor 21CR, the left screw motor 21SL, and the right screw motor 21SR is discharged to the hydraulic tank T through an oil cooler OC.

The front wheel drive part F3 is configured to be able to drive the front wheels 6. According to this embodiment, the front wheel drive part F3 mainly includes the front wheel travel motor 22 and a front wheel travel valve V2.

The front wheel travel motor 22 is a fixed displacement hydraulic motor that forms a closed circuit. The front wheel travel valve V2 operates in response to a control command from the controller 50 to cause hydraulic oil discharged by the front wheel travel pump 14F to flow into the intake port of the front wheel travel motor 22. According to the example illustrated in FIG. 3, the front wheel travel motor 22 includes a left front wheel travel motor 22L and a right front wheel travel motor 22R. The front wheel travel pump 14F supplies hydraulic oil to the left front wheel travel motor 22L and the right front wheel travel motor 22R in parallel.

The steering and compaction device drive part F4 is configured to be able to drive a steering device and a compaction device (neither of which is depicted). The steering device is a hydraulic device for steering the front wheels 6. According to this embodiment, the steering device, for example, changes the steering angle of the front wheels 6 using hydraulic oil discharged by the cylinder pump 14M according as the operator operates a steering wheel. Furthermore, the compaction device is a hydraulic device for compacting paving material. According to this embodiment, the compaction device includes a tamper and a vibrator and causes the tamper and the vibrator to operate using hydraulic oil discharged by the cylinder pump 14M.

The leveling part F5 is configured to be able to adjust pavement thickness. According to this embodiment, the leveling part F5 mainly includes the leveling cylinder 23, a leveling control valve 33, and a pilot check valve 33P.

The leveling cylinder 23 is a hydraulic cylinder to move up and down the leveling arm 3A to adjust pavement thickness. The leveling cylinder 23 is configured to retract when increasing pavement thickness and to extend when decreasing pavement thickness. According to the example illustrated in FIG. 3, the leveling cylinder 23 includes a left leveling cylinder 23L and a right leveling cylinder 23R.

The leveling control valve 33 is configured to operate in response to a control signal from the controller 50. According to the example illustrated in FIG. 3, the leveling control valve 33 includes a left leveling control valve 33L and a right leveling control valve 33R. In the case of increasing pavement thickness, the left leveling control valve 33L causes hydraulic oil discharged by the cylinder pump 14M to flow into the rod-side oil chamber of the left leveling cylinder 23L and discharges hydraulic oil flowing out of the head-side oil chamber of the left leveling cylinder 23L to the hydraulic oil tank T. In this case, the left leveling cylinder 23L retracts to raise the left leveling arm 3AL. The same is the case with the right leveling control valve 33R that retracts the right leveling cylinder 23R. In the case of decreasing pavement thickness, the left leveling control valve 33L causes hydraulic oil discharged by the cylinder pump 14M to flow into the head-side oil chamber of the left leveling cylinder 23L and discharges hydraulic oil flowing out of the rod-side oil chamber of the left leveling cylinder 23L to the hydraulic oil tank T. In this case, the left leveling cylinder 23L extends to lower the left leveling arm 3AL. The same is the case with the right leveling control valve 33R that extends the right leveling cylinder 23R.

The pilot check valve 33P is configured to prevent the leveling cylinder 23 from being moved by an external force. According to the example illustrated in FIG. 3, the pilot check valve 33P includes pilot check valves 33PaL, 33PbL, 33PaR and 33PbR. For example, the pilot check valve 33PaL allows hydraulic oil in the rod-side oil chamber of the left leveling cylinder 23L to flow toward the hydraulic oil tank T only when the left leveling control valve 33L operates according to the operator's operation to cause hydraulic oil discharged by the cylinder pump 14M to flow into the head-side oil chamber of the left leveling cylinder 23L. Otherwise, the pilot check valve 33PaL prevents hydraulic oil in the rod-side oil chamber of the left leveling cylinder 23L from flowing toward the hydraulic oil tank T. The same is the case with the pilot check valves 33PbL, 33PaR and 33PbR.

The hopper drive part F6 is configured to be able to open and close the hopper 2. According to this embodiment, the hopper drive part F6 mainly includes the hopper cylinder 24, a hopper control valve 34, and a pilot check valve 34P.

The hopper cylinder 24 is a hydraulic actuator to open and close the hopper 2, and retracts when opening the hopper 2 and extends when closing the hopper 2. According to the example illustrated in FIG. 3, the hopper cylinder 24 includes a left hopper cylinder 24L and a right hopper cylinder 24R.

The hopper control valve 34 is configured to operate in response to a control signal from the controller 50. According to the example illustrated in FIG. 3, the hopper control valve 34 includes a left hopper control valve 34L and a right hopper control valve 34R. In the case of opening the hopper 2, the left hopper control valve 34L causes hydraulic oil discharged by the cylinder pump 14M to flow into the rod-side oil chamber of the left hopper cylinder 24L and discharges hydraulic oil flowing out of the head-side oil chamber of the left hopper cylinder 24L to the hydraulic oil tank T. In this case, the left hopper cylinder 24L retracts. Furthermore, the right hopper control valve 34R causes hydraulic oil discharged by the cylinder pump 14M to flow into the rod-side oil chamber of the right hopper cylinder 24R and discharges hydraulic oil flowing out of the head-side oil chamber of the right hopper cylinder 24R to the hydraulic oil tank T. In this case, the right hopper cylinder 24R retracts. In the case of closing the hopper 2, the left hopper control valve 34L causes hydraulic oil discharged by the cylinder pump 14M to flow into the head-side oil chamber of the left hopper cylinder 24L and discharges hydraulic oil flowing out of the rod-side oil chamber of the left hopper cylinder 24L to the hydraulic oil tank T. In this case, the left hopper cylinder 24L extends. Furthermore, the right hopper control valve 34R causes hydraulic oil discharged by the cylinder pump 14M to flow into the head-side oil chamber of the right hopper cylinder 24R and discharges hydraulic oil flowing out of the rod-side oil chamber of the right hopper cylinder 24R to the hydraulic oil tank T. In this case, the right hopper cylinder 24R extends.

The pilot check valve 34P is configured to prevent the weight of the hopper 2 or the weight of the hopper 2 and the paving material in the hopper 2 from retracting the hopper cylinder 24 to open the hopper 2. According to the example illustrated in FIG. 3, the pilot check valve 34P includes a pilot check valve 34PL and a pilot check valve 34PR. For example, the pilot check valve 34PL allows hydraulic oil in the head-side oil chamber of the left hopper cylinder 24L to flow toward the hydraulic oil tank T only when the left hopper control valve 34L operates in response to the operator's operation to cause hydraulic oil discharged by the cylinder pump 14M to flow into the rod-side oil chamber of the left hopper cylinder 24L. Otherwise, the pilot check valve 34PL prevents hydraulic oil in the head-side oil chamber of the left hopper cylinder 24L from flowing toward the hydraulic oil tank T. The same is the case with the pilot check valve 34PR.

According to the hopper drive part F6, there is no pilot check valve installed between the rod-side oil chamber of the hopper cylinder 24 and the hopper control valve 34. This is because the hopper cylinder 24 is less likely to be accidentally extended by an external force because the hopper 2 has great weight. A pilot check valve, however, may be installed between the rod-side oil chamber of the hopper cylinder 24 and the hopper control valve 34.

The screed lift part F7 is configured to be able to lift the screed 3. According to this embodiment, the screed lift part F7 mainly includes a screed lift cylinder 25, a screed lift control valve 35, a selector valve 35a, a relief valve 35b, and a selector valve 35c.

The screed lift cylinder 25, which is a hydraulic actuator to lift the screed 3, retracts when lifting the screed 3 and extends when lowering the screed 3. According to the example illustrated in FIG. 3, the screed lift cylinder 25 includes a left screed lift cylinder 25L and a right screed lift cylinder 25R.

The screed lift control valve 35 is configured to operate in response to a control signal from the controller 50. In the case of lifting the screed 3, the screed lift control valve 35 causes hydraulic oil discharged by the cylinder pump 14M to flow into the rod-side oil chamber of the screed lift cylinder 25. In this case, the selector valve 35a is switched to a first position including a check valve in response to a control signal from the controller 50. This is for preventing hydraulic oil from flowing backward from the rod-side oil chamber of the screed lift cylinder 25 to the hydraulic oil tank T. Hydraulic oil flowing out of the head-side oil chamber of the screed lift cylinder 25 is discharged to the hydraulic oil tank T without going through the screed lift control valve 35. In this case, the screed lift cylinder 25 retracts. In the case of lowering the screed 3 onto the ground, the screed lift control valve 35 is not used (maintained in the state illustrated in FIG. 3). In this case, the selector valve 35a is switched to a second position including no check valve in response to a control signal from the controller 50. This is for causing hydraulic oil in the rod-side oil chamber of the screed lift cylinder 25 to flow out toward the hydraulic oil tank T. Therefore, the screed lift cylinder 25 extends because of the weight of the screed 3, and hydraulic oil in the rod-side oil chamber of the screed lift cylinder 25 is discharged to the hydraulic oil tank T through the selector valve 35a and the relief valve 35b.

The selector valve 35a and the relief valve 35b allow the screed 3 to move up and down as lift (the force of paving material to lift the screed 3) generated when the asphalt finisher 100 moves and paves a road changes. Specifically, when lift increases to move up the screed 3, the screed lift cylinder 25 retracts. In this case, hydraulic oil discharged by the cylinder pump 14M flows into the rod-side oil chamber of the screed lift cylinder 25 through a conduit C3, the screed lift control valve 35, and the selector valve 35a. When lift decreases to move down the screed 3, the screed lift cylinder 25 extends. In this case, hydraulic oil flowing out of the rod-side oil chamber of the screed lift cylinder 25 is discharged to the hydraulic oil tank T through the selector valve 35a, the screed lift control valve 35, and the relief valve 35b.

The selector valve 35c is switched to a first position including a check valve in response to a control signal from the controller 50 when the asphalt finisher 100 moves and paves a road, namely, while a downstream hydraulic device such as the screed extension and retraction part F8 is not in use. This is for preventing a downstream hydraulic device such as the screed extension and retraction part F8 from being adversely affected, specifically, for preventing the extendable screed 31, a crown device, a step device, etc., from accidentally moving.

The screed extension and retraction part F8 is configured to be able to extend and retract the extendable screed 31 in the vehicle width directions. According to this embodiment, the screed extension and retraction part F8 mainly includes the screed extension and retraction cylinder 27, a screed extension and retraction control valve 37, a pilot check valve 37P, and a relief valve 37V. According to the example illustrated in FIG. 3, the screed extension and retraction control valve 37 includes a left screed extension and retraction control valve 37L and a right screed extension and retraction control valve 37R. The pilot check valve 37P includes pilot check valves 37PaL, 37PaR, 37PbL and 37PbR. The relief valve 37V includes a left relief valve 37VL and a right relief valve 37VR.

The left screed extension and retraction control valve 37L is configured to operate in response to a control signal from the controller 50. In the case of retracting the left extendable screed 31L, the left screed extension and retraction control valve 37L causes hydraulic oil discharged by the cylinder pump 14M to flow into the rod-side oil chamber of the left screed extension and retraction cylinder 27L and discharges hydraulic oil flowing out of the head-side oil chamber of the left screed extension and retraction cylinder 27L to the hydraulic oil tank T. In this case, the left screed extension and retraction cylinder 27L retracts to retract the left extendable screed 31L. The same applies to the case of retracting the right extendable screed 31R. In the case of causing the left extendable screed 31L to protrude, the left screed extension and retraction control valve 37L causes hydraulic oil discharged by the cylinder pump 14M to flow into the head-side oil chamber of the left screed extension and retraction cylinder 27L and discharges hydraulic oil flowing out of the rod-side oil chamber of the left screed extension and retraction cylinder 27L to the hydraulic oil tank T. In this case, the left screed extension and retraction cylinder 27L extends to protrude the left extendable screed 31L.

The pilot check valve 37P is configured to prevent the screed extension and retraction cylinder 27 from being accidentally moved by an external force. For example, the pilot check valve 37PaL allows hydraulic oil in the rod-side oil chamber of the left screed extension and retraction cylinder 27L to flow toward the hydraulic oil tank T only when the left screed extension and retraction control valve 37L operates in response to the operator's operation to cause hydraulic oil discharged by the cylinder pump 14M to flow into the head-side oil chamber of the left screed extension and retraction cylinder 27L. Otherwise, the pilot check valve 37PaL prevents hydraulic oil in the rod-side oil chamber of the left screed extension and retraction cylinder 27L from flowing toward the hydraulic oil tank T. The same is the case with the pilot check valves 37PbL, 37PaR and 37PbR.

The relief valve 37V is configured to prevent a member related to the extendable screed 31 from being damaged by an excessive external force acting in a direction to retract the extendable screed 31. For example, the left relief valve 37VL allows hydraulic oil in the head-side oil chamber of the left screed extension and retraction cylinder 27L to flow out to the hydraulic oil tank T when the hydraulic oil in the head-side oil chamber receives an excessive external force acting in a direction to retract the left screed extension and retraction cylinder 27L to excessively increase. As a result, the left screed extension and retraction cylinder 27L retracts to absorb part of the external force, thereby preventing the left extendable screed 31L from being damaged. The same is the case with the right relief valve 37VR.

Next, an example of the correspondence between a travel speed vd of the asphalt finisher 100 and each of a feed rate vc of the conveyor CV and a rotational speed ωs of the screw SC is described with reference to FIGS. 4A and 4B. Specifically, FIG. 4A illustrates an example of the correspondence between the travel speed vd of the asphalt finisher 100 and the feed rate vc of the conveyor CV, and FIG. 4B illustrates an example of the correspondence between the travel speed vd of the asphalt finisher 100 and the rotational speed ωs of the screw SC.

In FIG. 4A, the travel speed vd of the asphalt finisher 100 is on the horizontal axis and the feed rate vc of the conveyor CV is on the vertical axis. The correspondence indicated by a solid line illustrates a correspondence when each of the pavement width and the pavement thickness is set at a predetermined value (for example, an initial value).

The correspondence indicated by a dashed line illustrates a correspondence when at least one of the pavement width and the pavement thickness is smaller than the predetermined value. The inclination of the dashed line is smaller than the inclination of a straight line. Typically, the inclination of the dashed line decreases as the pavement width decreases and decreases as the pavement thickness decreases. Even when one of the pavement width and the pavement thickness is smaller than the predetermined value, however, the inclination of the dashed line may be greater than the inclination of the straight line if the other of the pavement width and the pavement thickness is greater than the predetermined value.

The correspondence indicated by a one-dot chain line illustrates a correspondence when at least one of the pavement width and the pavement thickness is greater than the predetermined value. The inclination of the one-dot chain line is greater than the inclination of the straight line. Typically, the inclination of the one-dot chain line increases as the pavement width increases and increases as the pavement thickness increases. Even when one of the pavement width and the pavement thickness is greater than the predetermined value, however, the inclination of the dashed line may be smaller than the inclination of the straight line if the other of the pavement width and the pavement thickness is smaller than the predetermined value.

The correspondence, which is represented by a straight line according to the example illustrated in FIG. 4A, may also be represented by a polygonal line or a curved line. The correspondence may also be represented in a stepwise manner.

Specifically, FIG. 4A shows that when each of the pavement width and the pavement thickness is set at the predetermined value, the feed rate vc of the conveyor CV is adjusted to a value vc1 when the travel speed vd is at a value vd1 as indicated by Point P1 on the solid line. Furthermore, FIG. 4A shows that the feed rate vc of the conveyor CV increases to a value vc2 as the travel speed vd increases to a value vd2 as indicated by Point P2 on the solid line. Furthermore, FIG. 4A shows that the feed rate vc of the conveyor CV decreases to a value vc3 as the travel speed vd decreases to a value vd3 as indicated by Point P3 on the solid line.

Furthermore, FIG. 4A shows that the feed rate vc of the conveyor CV decreases to a value vc4 even when the travel speed vd remains the value vd1 as indicated by Point P4 on the dashed line, if the pavement width or the pavement thickness is reduced in the state indicated by Point P1 on the solid line.

Furthermore, FIG. 4A shows that the feed rate vc of the conveyor CV increases to a value vc5 even when the travel speed vd remains the value vd1 as indicated by Point P5 on the dashed line, if the pavement width or the pavement thickness is increased in the state indicated by Point P1 on the solid line.

In FIG. 4B, the travel speed vd of the asphalt finisher 100 is on the horizontal axis and the rotational speed ωs of the screw SC is on the vertical axis. The correspondence indicated by a solid line illustrates a correspondence when each of the pavement width and the pavement thickness is set at a predetermined value (for example, an initial value).

The correspondence indicated by a dashed line illustrates a correspondence when at least one of the pavement width and the pavement thickness is smaller than the predetermined value. The inclination of the dashed line is smaller than the inclination of a straight line. Typically, the inclination of the dashed line decreases as the pavement width decreases and decreases as the pavement thickness decreases. Even when one of the pavement width and the pavement thickness is smaller than the predetermined value, however, the inclination of the dashed line may be greater than the inclination of the straight line if the other of the pavement width and the pavement thickness is greater than the predetermined value.

The correspondence indicated by a one-dot chain line illustrates a correspondence when at least one of the pavement width and the pavement thickness is greater than the predetermined value. The inclination of the one-dot chain line is greater than the inclination of the straight line. Typically, the inclination of the one-dot chain line increases as the pavement width increases and increases as the pavement thickness increases. Even when one of the pavement width and the pavement thickness is greater than the predetermined value, however, the inclination of the dashed line may be smaller than the inclination of the straight line if the other of the pavement width and the pavement thickness is smaller than the predetermined value.

The correspondence, which is represented by a straight line according to the example illustrated in FIG. 4B, may also be represented by a polygonal line or a curved line. The correspondence may also be represented in a stepwise manner.

Specifically, FIG. 4B shows that when each of the pavement width and the pavement thickness is set at the predetermined value, the rotational speed ωs of the screw SC is adjusted to a value ws1 when the travel speed vd is at the value vd1 as indicated by Point P6 on the solid line. Furthermore, FIG. 4B shows that the rotational speed ωs of the screw SC increases to a value ws2 as the travel speed vd increases to the value vd2 as indicated by Point P7 on the solid line. Furthermore, FIG. 4B shows that the rotational speed ωs of the screw SC decreases to a value ws3 as the travel speed vd decreases to the value vd3 as indicated by Point P8 on the solid line.

Furthermore, FIG. 4B shows that the rotational speed ωs of the screw SC decreases to a value ws4 even when the travel speed vd remains the value vd1 as indicated by Point P9 on the dashed line, if the pavement width or the pavement thickness is reduced in the state indicated by Point P6 on the solid line.

Furthermore, FIG. 4B shows that the rotational speed ωs of the screw SC increases to a value ws5 even when the travel speed vd remains the value vd1 as indicated by Point P10 on the dashed line, if the pavement width or the pavement thickness is increased in the state indicated by Point P6 on the solid line.

Thus, the feed rate vc of the conveyor CV and the rotational speed ωs of the screw SC are configured to automatically change according to changes in construction conditions. This is because the travel speed vd of the asphalt finisher 100, the pavement width, and the pavement thickness change according to changes in construction conditions.

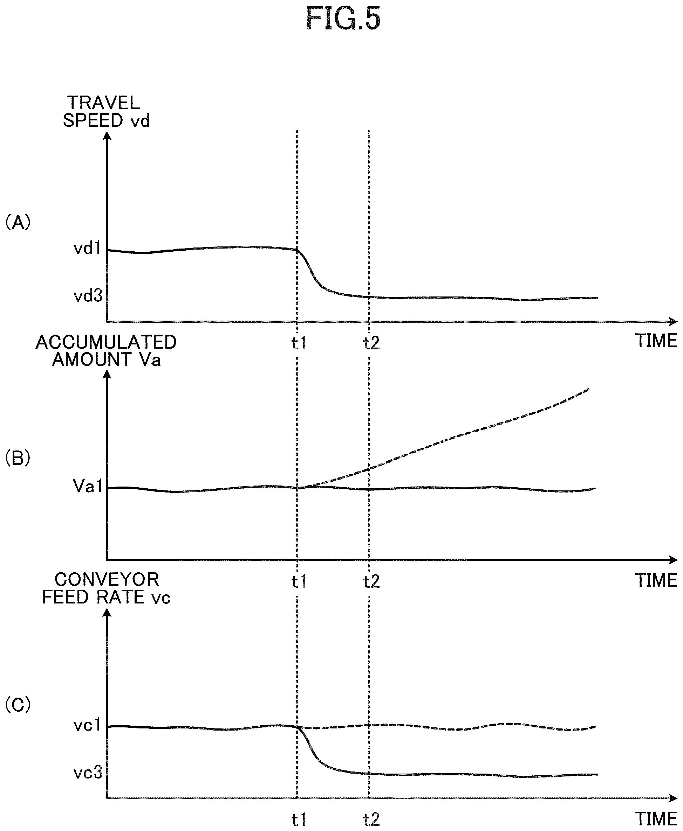

Next, changes in an accumulated amount Va of paving material and the feed rate vc of the conveyor CV when the travel speed vd of the asphalt finisher 100 decreases are described with reference to FIG. 5. FIG. 5 illustrates temporal transitions of the travel speed vd of the asphalt finisher 100, the accumulated amount Va of paving material, and the feed rate vc of the conveyor CV.

Specifically, FIG. 5(A) illustrates a temporal transition of the travel speed vd, FIG. 5(B) illustrates a temporal transition of the accumulated amount Va, and FIG. 5(C) illustrates a temporal transition of the feed rate vc. The temporal transition represented by a solid line in each of FIGS. 5(B) and 5(C) illustrates a temporal transition when the controller 50 adjusts the feed rate vc of the conveyor CV. The temporal transition represented by a dashed line in each of FIGS. 5(B) and 5(C) illustrates a temporal transition when the controller 50 makes no adjustment. The temporal transition of the travel speed vd represented by a solid line in FIG. 5(A) is independent of the presence or absence of an adjustment made by the controller 50. Furthermore, the accumulated amount Va illustrated in FIG. 5(B) is the amount of paving material accumulated in the measurement space MS.

As illustrated in FIG. 5(A), when the travel speed vd starts to decrease from the value vd1 at time t1, the controller 50 decreases the feed rate vc of the conveyor CV. According to this embodiment, the adjustment part 50B of the controller 50 refers to a reference table in which the correspondence between the travel speed vd and the feed rate vc as illustrated in FIG. 4A is stored, and derives a value of the feed rate vc corresponding to the current value of the travel speed vd as a target value. Then, the adjustment part 50B outputs a control command to the conveyor control valve V1C so that the feed rate vc becomes the target value.

As a result, the feed rate vc starts to decrease at time t1 as indicated by a solid line in FIG. 5(C). Thereafter, when the travel speed vd stops decreasing and becomes the value vd3 at time t2, the controller 50 stops decreasing the feed rate vc of the conveyor CV. According to this embodiment, the adjustment part 50B outputs a control command to the conveyor control valve V1C so that the feed rate vc becomes the value vc3. As a result, the feed rate vc becomes the value vc3 at time t2 as indicated by a solid line in FIG. 5(C).

Thus, the adjustment part 50B can decrease the feed rate vc according as the travel speed vd decreases, and therefore can prevent the accumulated amount Va from excessively increasing when the travel speed vd decreases.

Specifically, the accumulated amount Va is maintained at Va1 that is a value before the start of the decrease in the travel speed vd even after the travel speed vd decreases to the value vd3 at time t2 as indicated by a solid line in FIG. 5(B).

In contrast, if no adjustment is made by the adjustment part 50B, the feed rate vc of the conveyor CV is kept maintained at the value vc1 after the travel speed vd starts decreasing at time t1 and also after the travel speed vd decreases to the value vd3 at time t2 as indicated by a dashed line in FIG. 5(C). As a result, the accumulated amount Va starts to increase at time t1 and continues to increase after time t2.

This is because a volume VMc of paving material per unit time conveyed toward the screed 3 by the conveyor CV exceeds a volume VMs of paving material per unit time spread and leveled by the screed 3.

Specifically, when the entrance OP (see FIGS. 1A and 1B) of the conveyance path CP has a width W1 and a height H1, the volume VMc of paving material per unit time conveyed toward the screed 3 by the conveyor CV is expressed by width W1 × height H1 × feed rate vc.

Furthermore, when a new pavement road to be paved has a pavement width W2 and a pavement thickness H2, the volume VMs of paving material per unit time spread and leveled by the screed 3 is expressed by pavement width W2 × pavement thickness H2 × travel speed vd.

In the case where the volume VMc before the decrease of the travel speed vd, namely, when the travel speed vd is the value vd1, is equal to the volume VMs, if the feed rate vc is maintained as is when the travel speed vd decreases, the volume VMc becomes larger than the volume VMs, so that the accumulated amount Va increases.

The adjustment part 50B of the controller 50, which changes the feed rate vc of the conveyor CV according as the travel speed vd changes according to the example illustrated in FIG. 5, may also change the rotational speed ωs of the screw SC in addition to the feed rate vc of the conveyor CV. In this case, the adjustment part 50B refers to a reference table in which the correspondence between the travel speed vd and the rotational speed ωs as illustrated in FIG. 4B is stored, and derives a value of the rotational speed ωs corresponding to the current value of the travel speed vd as a target value. Then, the adjustment part 50B outputs a control command to the screw control valve V1S so that the rotational speed ωs becomes the target value.

Furthermore, according to the example illustrated in FIG. 5, the adjustment part 50B derives a value of the feed rate vc corresponding to the current value of the travel speed vd as a target value and thereafter outputs a control command to the conveyor control valve V1C so that the feed rate vc becomes the target value. For example, the adjustment part 50B performs feedback control on the feed rate vc based on the output of the conveyor feed rate sensor 46. The adjustment part 50B, however, may also be configured to decrease the feed rate vc by a predetermined amount when the travel speed vd decreases by a predetermined amount and increase the feed rate vc by a predetermined amount when the travel speed vd increases by a predetermined amount. For example, the adjustment part 50B may decrease the value of a control command to the conveyor control valve V1C by a predetermined amount when the travel speed vd decreases by a predetermined amount and increase the value of a control command to the conveyor control valve V1C by a predetermined amount when the travel speed vd increases by a predetermined amount. In this case, the conveyor feed rate sensor 46 may be omitted. The same applies to the adjustment of the rotational speed ωs of the screw SC.

As described above, the asphalt finisher 100 includes the tractor 1, the hopper 2 installed in front of the tractor 1 to receive paving material, the conveyor CV to convey the paving material in the hopper 2 to the rear side of the tractor 1, the screw SC to lay and spread the paving material conveyed by the conveyor CV behind the tractor 1, and the screed 3 to lay and level the paving material laid and spread by the screw SC behind the screw SC. The asphalt finisher 100 is configured to control the feed rate vc of the conveyor CV and the rotational speed ωs of the screw SC based on the travel speed vd.

According to this configuration, the asphalt finisher 100 can prevent an excess or deficiency of paving material from being caused around the screw SC when the travel speed vd changes, for example.

The asphalt finisher 100 may also be configured to change the feed rate vc of the conveyor CV and the rotational speed ωs of the screw SC based on the travel speed vd.

According to this configuration, the asphalt finisher 100 can prevent an excess or deficiency of paving material from being caused around the screw SC by changing the feed rate vc of the conveyor CV and the rotational speed ωs of the screw SC when the travel speed vd changes, for example.

The asphalt finisher 100 may also be configured to calculate the target amount of paving material based on the travel speed vd and change the feed rate vc of the conveyor CV based on the target amount. In this case, the target amount of paving material is, for example, the target amount of paving material supplied to the screw SC per unit time. The asphalt finisher 100 may also be configured to change the feed rate vc of the conveyor CV and the rotational speed ws of the screw SC based on the target amount. The target amount of paving material is, for example, the target amount of paving material supplied to the screed 3 per unit time.

According to this configuration, the asphalt finisher 100 can calculate the target amount of paving material that matches the travel speed vd and thereafter change the feed rate vc of the conveyor CV or change the feed rate vc of the conveyor CV and the rotational speed ωs of the screw SC so that the target amount can be achieved when the travel speed vd changes, for example. As a result, the asphalt finisher 100 can prevent an excess or deficiency of paving material from being caused around the screw SC.

The asphalt finisher 100 may also be configured to calculate the target amount based on the travel speed vd, the pavement width W2, and the pavement thickness H2. For example, the asphalt finisher 100 may calculate the volume of a new pavement road to be paved per unit time based on the travel speed vd, the pavement width W2, and the pavement thickness H2 and calculate the target amount of paving material to be supplied to the screed 3 per unit time based on the volume.

According to this configuration, the asphalt finisher 100 can calculate the target amount of paving material to be supplied to the screed 3 per unit time based on the volume of a new pavement road to be paved per unit time when at least one of the travel speed vd, the pavement width W2, and the pavement thickness H2 changes, for example. Furthermore, the asphalt finisher 100 can change the feed rate vc of the conveyor CV or change the feed rate vc of the conveyor CV and the rotational speed ωs of the screw SC so that the target amount can be achieved. As a result, the asphalt finisher 100 can prevent an excess or deficiency of paving material from being caused around the screw SC.

While a hydraulic motor is used according to the above-described embodiment, an electric motor may be used instead of a hydraulic motor.

A preferred embodiment of the present invention is described in detail above. The present invention, however, is not limited to the above-described embodiment. Various variations, substitutions, etc., may be applied to the above-described embodiment without departing from the scope of the present invention. Furthermore, separately described features may be combined to the extent that no technical contradiction is caused.

Furthermore, the controller 50 may perform various determinations using trained models that have learned control conditions. For example, the adjustment part 50B or the hopper control part 50C of the controller 50 may perform various determinations using trained models that have learned control conditions of the hopper 2. Various determinations include, for example, a determination as to whether the amount of paving material in the hopper 2 is more than or less than a predetermined amount, a determination as to whether the height of paving material in the center of the hopper 2 is greater than a predetermined height, a determination as to whether the paving material in the hopper 2 has run out, and a determination as to whether the actual height of paving material in each of the inner area, the central area, and the outer area of the measurement space MS is greater than, equal to, or smaller than a target height.

Specifically, the controller 50 performs various determinations based on an input image that is an image captured by a monocular camera serving as the space recognition device CM, using trained models stored in a nonvolatile storage. The space recognition device CM may be attached to a desired position on the asphalt finisher 100. Specifically, the controller 50 performs various determinations based on the input image by loading trained models into a primary storage such as a RAM from the nonvolatile storage and causing the CPU to execute processes based on the trained models.

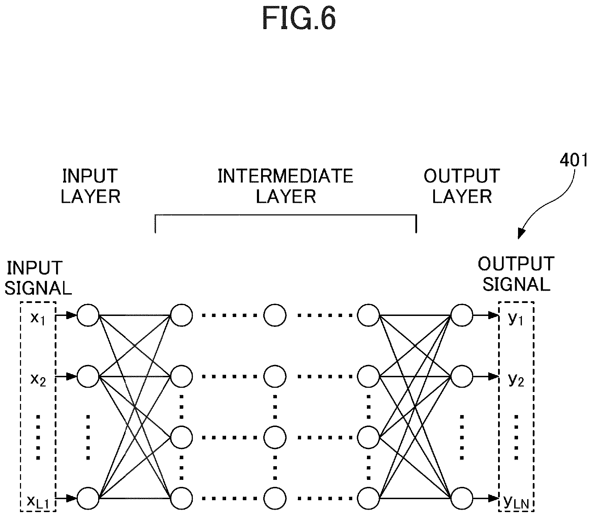

For example, as illustrated in FIG. 6, a trained model may be constituted mainly of a neural network 401. According to this example, the neural network 401 is a so-called deep neural network including one or more intermediate layers (hidden layers) between an input layer and an output layer. According to the example of FIG. 6, the number of intermediate layers is N (where N is a natural number greater than or equal to two). According to the neural network 401, a weight parameter that represents the strength of connection with a lower layer is defined with respect to each of the neurons of each intermediate layer. According to the example of FIG. 6, the number of neurons is L (where L is a natural number greater than or equal to two). The neural network 401 is configured such that a neuron of each layer outputs the sum of the values obtained by multiplying input values from the upper-layer neurons by their respective defined weight parameters to lower-layer neurons through a threshold function.

Machine learning, specifically, deep learning, is performed on the neural network 401 to optimize the above-described weight parameters. As a result, for example, as illustrated in FIG. 6, the input image is input to the neural network 401 as an input signal x, and the neural network 401 can output a predefined monitoring target list (the probability (predicted probability) of the presence of an object with respect to each type of object according to this example) and a scene (situation) based on their positional relationship, etc., as an output signal y. The neural network 401 is, for example, a convolutional neural network (CNN). The CNN is a neural network to which existing image processing techniques (convolution and pooling) are applied. Specifically, the CNN repeats a combination of convolution and pooling on the input image to extract feature data (a feature map) smaller in size than the input image. The pixel value of each pixel of the extracted feature map is input to a neural network constituted of fully connected layers, and the output layer of the neural network can output, for example, a value representing the state of the screw SC, a value representing the state of the conveyor CV, or the like.

Thus, the neural network 401 may also be configured such that the input image is input as the input signal x and the position and the size of an object in the input image (namely, an area occupied by the object in the input image) and the type of the object can be output as the output signal y (for example, a value representing the state of the screw SC, a value representing the state of the conveyor CV, or the like). That is, the neural network 401 may be configured to detect an object in the input image (determine the presence or absence of an area occupied by an object in the input image) and classify the object. Furthermore, in this case, the output signal y may be configured in the format of image data in which the occupied area of the object and information on its classification are added to the input image serving as the input signal x in a superimposed manner. This enables the controller 50 to identify, for example, a value representing the state of the screw SC, a value representing the state of the conveyor CV, or the like based on the position, size, etc., of the occupied area of the object in the input image.

The monocular camera serving as the space recognition device CM is fixed to a desired position on the asphalt finisher 100 and its imaging range (angle of view) is predefined (prefixed). When the position of an object (such as paving material laid and spread by the screw SC) detected by a leaned model is within a monitoring area and the object is classified as an object in the monitoring target list, the controller 50 can determine the detection of a monitoring target object within the monitoring area. The neural network 401 may be configured to include individual neural networks corresponding to the process of extracting an occupied area (window) in which an object is present in the input image and the process of identifying the type of the object in the extracted area. That is, the neural network 401 may be configured to perform the detection of an object and the classification of the object in a stepwise manner. Furthermore, the neural network 401 may be configured to include individual neural networks corresponding to the process of defining the classification of an object and the occupied area (Bounding box)of the object with respect to each of grid cells that are a predetermined number of partial areas into which the entire area of the input image is divided and the process of combining the occupied areas of the object with respect to each type based on the classification of the object with respect to each grid cell and finalizing the occupied area of the object. That is, the neural network 401 may be configured to perform the detection of an object and the classification of the object in parallel.

Furthermore, the controller 50 may be configured to learn a control condition associated with the state of the screw SC, the state of the conveyor CV, or the like. For example, the controller 50 may be configured to learn the relationship between the state of the paving material in the measurement space MS and the state of the screw SC, the state of the conveyor CV, or the like (a screw control condition, a conveyor control condition, or the like) according to a dataset created based on the combination of a captured image of paving material in the measurement space MS obtained by the space recognition device CM or the like and reference information representing "a preferred state of the screw SC", "a preferred state of the conveyor CV, or the like serving as determination data prestored in a nonvolatile storage. This learning process may be executed in a management apparatus (machine learning apparatus) connected to the asphalt finisher 100 via radio communications. In this case, a trained model created in the management apparatus (machine learning apparatus) is transmitted to the asphalt finisher 100. For example, the controller 50 (the adjustment part 50B) may determine a preferred state of the screw SC corresponding to the current state of the paving material in the measurement space MS using the received trained model and control the screw SC to be in the preferred condition. For example, the controller 50 (the adjustment part 50B) may also determine a preferred state of the conveyor CV corresponding to the current state of the paving material in the measurement space MS using the received trained model and control the conveyor CV to be in the preferred condition.

Furthermore, the controller 50 may control each of the screw SC and the conveyor CV using a calculated value calculated in a trained model. Furthermore, the controller 50 may use a calculated value calculated in a trained model as a limit value (a lower limit value or an upper limit value) for the conveyor feed rate vc derived from the correspondence as illustrated in FIG. 4A. Furthermore, the controller 50 may also use a calculated value calculated in a trained model as a limit value (a lower limit value or an upper limit value) for the rotational speed ωs of the screw SC derived from the correspondence as illustrated in FIG. 4B.

The present application is based upon and claims priority to Japanese Patent Application No. 2020-059079, filed on March 27, 2020, the entire contents of which are hereby incorporated herein by reference.

### DESCRIPTION OF THE REFERENCE NUMERALS

1 ... tractor 2 ... hopper 3 ... screed 3A ... leveling arm 5 ... rear wheel 6 ... front wheel 14 ... hydraulic source 14C ... charge pump 14E ... engine 14F ... front wheel travel pump 14F 14M ... cylinder pump 14R ... rear wheel travel pump 14S ... conveyor and screw pump 20L ... left rear wheel travel motor 20La ... check valve 20Lb ... relief valve 20R ... right rear wheel travel motor 20Ra ... check valve 20Rb ... relief valve 21 ... conveyor and screw motor 21CL ... left conveyor motor 21CR ... right conveyor motor 21SL ... left screw motor 21SR ... right screw motor 22 ... front wheel travel motor 23 ... leveling cylinder 23L ... left leveling cylinder 23R ... right leveling cylinder 24 ... hopper cylinder 24L ... left hopper cylinder 24R ... right hopper cylinder 25 ... screed lift cylinder 25L ... left screed lift cylinder 25R ... right screed lift cylinder 27 ... screed extension and retraction cylinder 27L ... left screed extension and retraction cylinder 27R ... right screed extension and retraction cylinder 30 ... main screed 31 ... extendable screed 33 ... leveling control valve 33L ... left leveling control valve 33R ... right leveling control valve 33P, 33PaL, 33PaR, 33PbL, 33PbR ... pilot check valve 34 ... hopper control valve 34L ... left hopper control valve 34R ... right hopper control valve 34P, 34PL, 34PR ... pilot check valve 35 ... screed lift control valve 35a ... selector valve 35b ... relief valve 35c ... selector valve 37 ... screed extension and retraction control valve 37P, 37PaL, 37PaR, 37PbL, 37PbR ... pilot check valve 37V ... relief valve 37VL ... left relief valve 37VR ... right relief valve 40 ... side plate 41 ... extendable mold board 42 ... screed step 43 ... retaining plate 44 ... measuring device 45 ... screw rotational speed sensor 46 ... conveyor feed rate sensor 47 ... travel speed sensor 48 ... secondary storage 50 ... controller 50A ... calculation part 50B ... adjustment part 50C ... hopper control part 51 ... screw controller 52 ... conveyor controller 53 ... hopper controller 100 ... asphalt finisher CM ... space recognition device CP ... conveyance path CV ... conveyor F1 ... rear wheel drive part F2 ... conveyor and screw drive part F3 ... front wheel drive part F4 ... steering and compaction device drive part F5 ... leveling part F6 ... hopper drive part F7 ... screed lift part F8 ... screed extension and retraction part OC ... oil cooler OP ... entrance SC ... screw SCLE ... left extension screw SCLM ... left main screw SCRE ... right extension screw SCRM ... right main screw V0 ... speed reducer switch valve V1C ... conveyor control valve V1CL ... left conveyor control valve V1CR ... right conveyor control valve V1S ... screw control valve V1SL ... left screw control valve V1SR ... right screw control valve V2 ... front wheel travel valve

## Claims

1. An asphalt finisher comprising:
a tractor;
a hopper installed in front of the tractor to receive paving material;
a conveyor configured to convey the paving material in the hopper to a rear side of the tractor;
a screw configured to lay and spread the paving material conveyed by the conveyor behind the tractor; and
a screed configured to lay and level the paving material laid and spread by the screw behind the screw,
wherein a feed rate of the conveyor and a rotational speed of the screw are controlled based on a travel speed.

2. The asphalt finisher as claimed in claim 1, wherein the feed rate of the conveyor and the rotational speed of the screw are changed based on the travel speed.

3. The asphalt finisher as claimed in claim 2, wherein
a target amount of the paving material is calculated based on the travel speed, and
the feed rate of the conveyor and the rotational speed of the screw are changed based on the target amount.

4. The asphalt finisher as claimed in claim 3, wherein the target amount is calculated based on the travel speed, pavement width, and pavement thickness.

5. The asphalt finisher as claimed in claim 3, wherein the target amount of the paving material is limited based on an amount of the paving material accumulated between a mold board and a retaining plate.

6. The asphalt finisher as claimed in claim 3, wherein a left target amount of the paving material supplied to a left side in a vehicle width direction and a right target amount of the paving material supplied to a right side in the vehicle width direction are separately calculated as the target amount of the paving material.

7. A machine learning apparatus **characterized by** learning a control condition according to a dataset including a combination of information on paving material in a measurement space set in an area surrounding an asphalt finisher and at least one of a preferred state of a screw and a preferred state of a conveyor.

8. An asphalt finisher, wherein
a trained model created by the machine learning apparatus as set forth in claim 7 is input, and at least one of a state of the screw and a state of the conveyor is output in response to an input of current information on the paving material in the measurement space based on the trained model.
